# FASCICULE DE BREVET EUROPEEN

(11) **EP 1 213 088 B1**
(45) Date de publication et mention de la délivrance du brevet: **23.04.2008**
(21) Numéro de dépôt: 01403140.5
(22) Date de dépôt: 06.12.2001
(51) Int. Cl.: B23K 20/12

(54) **Outillage de maintien d'une aube, et son application au soudage par friction des aubes**
Haltausrüstung einer Schaufel und Verwendung zum Reibschweissen von Schaufeln
Maintening tooling of turbine blade, and use for turbine blade friction welding

(30) Priorité: 07.12.2000 FR 0015891
(43) Date de publication de la demande: 12.06.2002
(73) Titulaire: SNECMA, 75015 Paris (FR)
(72) Inventeur: Collot, André Claude Felix, 91450 Mennecy (FR); Ferte, Jean-Pierre, 91100 Corbeil Essonnes (FR)

(56) Documents cités:
- EP-A- 0 669 183
- EP-A- 0 718 069
- EP-A- 1 000 696
- EP-A- 1 000 697

## Description

Les sujets de cette invention sont un outillage de maintien d'une aube et l'application de cet outillage au soudage par friction d'aubes.

Certains rotors de machines comprennent ce qu'on appelle des disques aubagés monobloc, c'est-à-dire des portions de rotor auxquelles des étages d'aubes tournantes sont unis rigidement par un soudage, contrairement à la conception classique où des pieds d'aubes à section en forme de bulbe, de queue d'aronde ou d'une autre forme du même genre sont glissés en des rainures à section complémentaire du disque. Les disques monobloc sont dans l'ensemble plus légers, ce qui explique qu'on puisse les préférer.

Les disques proprement dits sont en généralement fabriqués avec des manchettes d'aubes, et les pales des aubes sont formées séparément et soudées sur les manchettes par un procédé qui est normalement du soudage par friction. Enfin, des surépaisseurs des aubes sont retirées par usinage. Un point faible de ce procédé de fabrication est que les pales des aubes doivent être maintenues fermement pendant le soudage, ce qui peut être embarrassant si leur forme est complexe et notamment si elle est vrillée. Dans le brevet français 2 716 397 qui traite du soudage par friction d'aubes, les pales des aubes sont retenues entre des mors qui appuient sur sensiblement tout leur périmètre près du bord de raccordement aux manchettes des aubes. Cette solution est praticable mais ne permet pas forcément de placer l'aube avec une grande précision dans la machine ni à une position invariable. De plus, l'usinage de mors possédant une face d'appui complexe peut être difficile à réaliser avec une bonne précision.

Un outillage de maintien d'une aube est connu du document EP 1 000 697. Cet outillage est toutefois insatisfaisant.

Un outillage perfectionné de maintien d'une aube est proposé comme l'invention. Pour résumer, il comprend : un cadre muni de trois facettes d'appui latéral de l'aube dont une première facette supérieure d'appui est proche du sommet de l'aube et deux facettes inférieures d'appui sont proches de portions inférieures de bords de fuite et d'attaque de l'aube ; un verrou d'aube mobile sur le cadre et opposé à la facette supérieure d'appui ; deux mors mobiles sur le cadre et dirigés vers les portions inférieures de bords d'attaque et de fuite dans des directions sensiblement concourantes mais pas alignées, et dirigés aussi sensiblement vers les facettes inférieures d'appui ; un système de commande de mors ; et deux facettes d'appui vertical de l'aube.

Un positionnement exact de l'aube est garanti par l'appui sur les cinq facettes ; les mors pincent l'aube posée sur le cadre fermement tout en la maintenant sur les appuis latéraux inférieurs ; enfin, le verrou sert à maintenir l'aube en appui sur la facette d'appui supérieure.

Les mors sont avantageusement en forme de coins pénétrant dans des encoches de l'aube ménagées auparavant. De même, il est avantageux que les facettes d'appui vertical soient formées par des faces supérieures des mors, faces qui sont horizontales, alors que les faces inférieures des mors sont inclinées pour réaliser le coin servant de serrage.

Le système de commande peut comprendre des cames de transmission poussant sur des faces postérieures des mors ; il est prévu, dans des formes préférées de l'invention, que ces cames de transmission comprennent des mécanismes de recul des mors pour cesser le serrage de l'aube quand les cames sont retirées et permettre le dégagement de l'outillage.

Cet outillage est facilement compatible avec un système de commande unique qui peut comprendre, après un organe de commande avantageusement constitué par un système de transmission à vis et écrou, une came d'actionnement agissant sur les deux cames de transmission mentionnées auparavant.

D'autres aspects de l'invention et leurs avantages apparaîtront plus clairement à la lecture de la description qui suit en liaison aux figures :
- la figure 1 est une vue générale d'une aube destinée à être incorporée à un disque aubagé monobloc par un soudage par friction d'après le procédé pour lequel l'outillage de l'invention a été conçu ;
- la figure 2 est une vue générale de l'outillage ;
- la figure 3 est une vue de dessus et partielle représentant essentiellement les surfaces d'appui de l'aube contre l'outillage et les mors de serrage ;
- les figures 4 et 5 sont une coupe verticale et une coupe horizontale d'un mécanisme de came conforme à l'invention ;
- la figure 6 représente le verrou utilisé au sommet de l'outillage ;
- et les figures 7 et 8 illustrent l'insertion d'une aube nouvelle dans l'outillage.

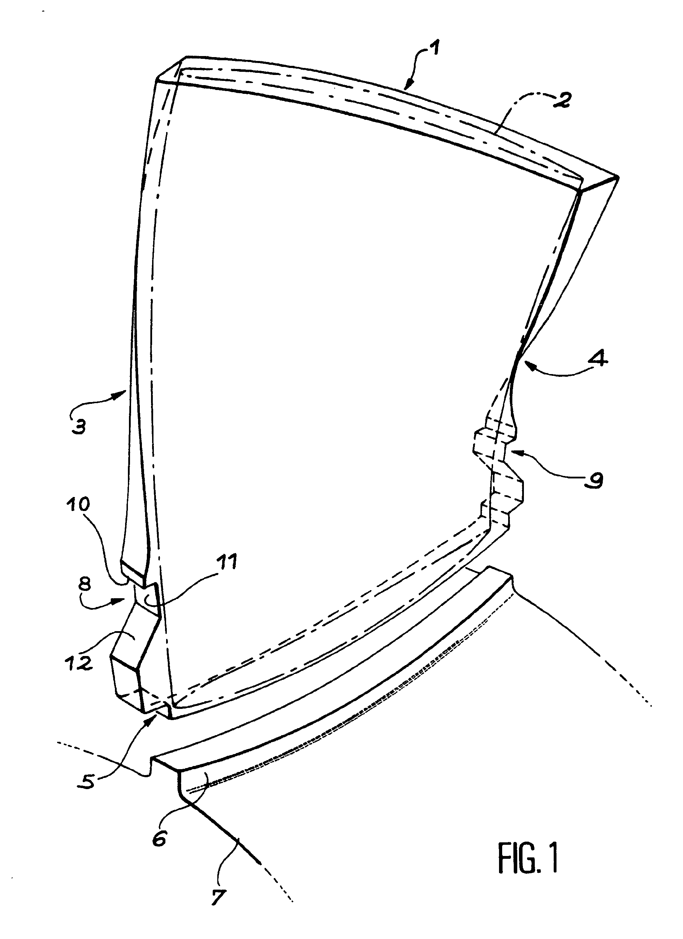

Une ébauche de pale d'aube de disque aubagé monobloc peut provenir de forgeage, d'usinage ou du vrillage d'une tôle comme il apparaît clairement à la figure 1. Cette ébauche de pale porte la référence 1, et la pale à l'état fini 2 est représentée en traits mixtes ; après le soudage, elle sera usinée par un fraisage à l'extrados et à l'intrados qui ôtera les surépaisseurs de l'ébauche 1, et les régions de bord d'attaque 3 et de bord de fuite 4 seront aussi usinées de façon appropriée. L'ébauche 1 comprend encore un talon 5 destiné à être consommé au soudage par friction. On a figuré une manchette 6 sur un disque 7 à laquelle l'ébauche 1 devra être soudée. Deux encoches 8 et 9 ont été opérées dans l'ébauche 1 au niveau inférieur des bords d'attaque et de fuite 3 et 4 respectivement, et les encoches 8 et 9 sont délimitées par une face supérieure 10 d'appui, une face de fond 11, et une face inférieure pentue 12.

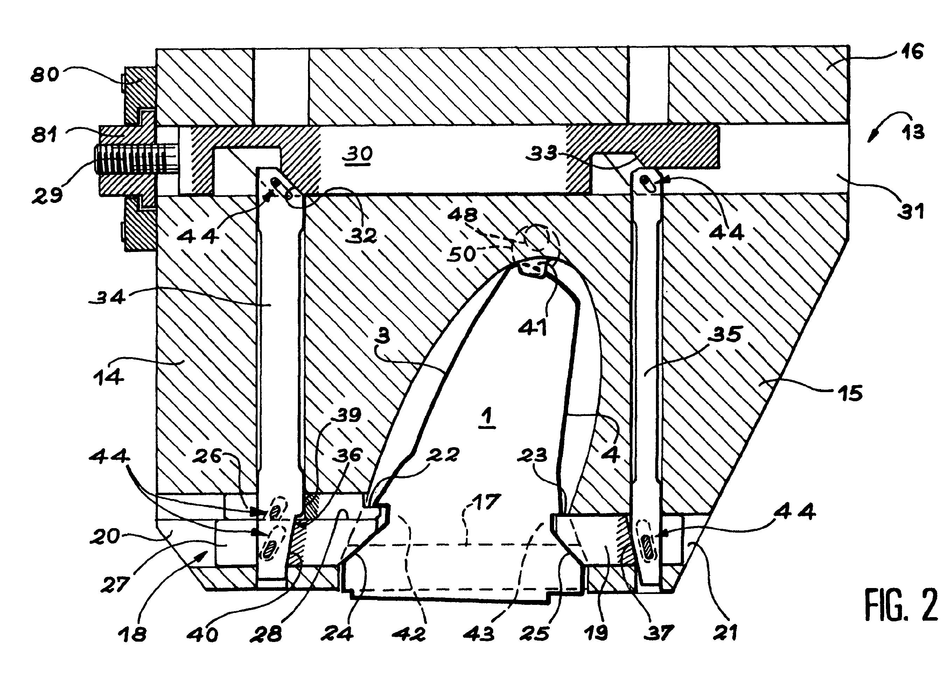

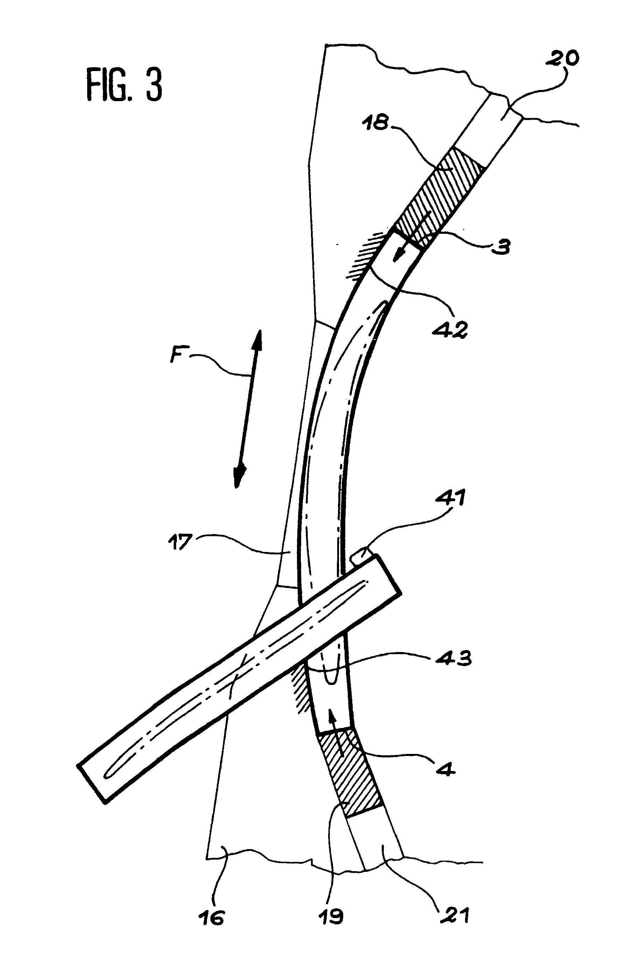

On se reporte à la figure 2 qui illustre l'ébauche 1 maintenue dans l'outillage conforme à l'invention. Celui-ci comprend un cadre 13 composé essentiellement de deux colonnes 14 et 15 s'élevant de part et d'autre de l'ébauche 1, à côté des bords d'attaque 3 et de fuite 4, et un chapiteau 16 reliant les sommets des colonnes 14 et 15. Une toile 17 illustrée à la figure 3 essentiellement peut relier les colonnes 14 et 15 pour raidir le cadre 13 et fournir un meilleur appui à l'ébauche 1, ainsi qu'il ressortira plus loin.

Des mors 18 et 19 sont disposés au bas des colonnes 14 et 15 et coulissent dans des rainures horizontales 20 et 21 dont les directions sont concourantes, comme on le voit à la figure 3, sans qu'elles soient toutefois alignées. Les mors 18 et 19 portent chacun une facette horizontale d'appui, respectivement 22 et 23, à leur partie supérieure et une facette pentue, 24 ou 25, respectivement à leur extrémité appuyant sur l'aube. De plus, si le mors 19 est unitaire, le mors 18 est composé de deux portions superposées 26 et 27, séparées par une surface horizontale 28, dont la première porte la facette d'appui 22 et la seconde la facette pentue 24.

L'outillage comprend aussi un système de commande comprenant un organe de commande unique sous la forme d'un écrou 81 retenu par une collerette 80 sur une face latérale de la colonne 14, une vis 29 engagée dans l'écrou 81, une came d'actionnement 30 horizontale coulissant dans une rainure 31 du chapiteau 16 et fixée à la vis 29, et qui comprend deux surfaces de came 32 et 33 inclinées dans la même direction ; enfin, le système de commande comprend deux tiges 34 et 35 ou cames de transmission verticales, coulissant dans les colonnes 14 et 15 et comprenant à leur extrémité supérieure des surfaces de glissement sur les surfaces de came 32 et 33 de la came d'actionnement 30 et, à leur extrémité inférieure, des surfaces de came 36 et 37 destinées à agir sur des surfaces complémentaires de glissement des mors 18 et 19. Comme le mors 18 est divisé, la surface de came correspondante 36 est également divisée en une portion supérieure 39 en saillie sur une portion inférieure 40, associées respectivement aux portions 26 et 27 de ce mors 18.

Le montage de l'ébauche 1 dans l'outillage peut être décrit comme voici. Les mors 18 et 19 étant rétractés, l'ébauche 1 est posée entre les colonnes 14 et 15 sur les deux facettes horizontales d'appui 22 et 23 et sur trois facettes d'appui latérales, dont l'une est une facette supérieure d'appui 41 située sous le chapiteau 16 et les deux autres sont des facettes inférieures d'appui 42 et 43 établies près des colonnes 14 et 15 et sur lesquelles l'ébauche 1 est posée par des portions adjacentes aux encoches 8 et 9.

L'ébauche 1 ayant été posée, le système de commande est mis en action en tournant l'écrou 81 : la came d'actionnement 30 est déplacée vers la gauche de la figure 1 pour que ses surfaces de came 32 et 33 pèsent sur les tiges 34 et 35 et les abaissent ; les surfaces de came 36 et 37 des tiges 34 et 35 pèsent à leur tour sur les mors 18 et 19 et les rapprochent l'un de l'autre jusqu'à ce qu'ils entrent dans les encoches 8 et 9 et coincent l'ébauche 1. Le serrage devra être suffisant pour supprimer tous les jeux et immobiliser parfaitement l'aube dans l'outillage. Les efforts perpendiculaires à la surface à souder et parallèles à la direction de friction passeront de l'outillage dans l'aube par le serrage des surfaces pentues 24 et 25 des mors 18 et 19. Ces surfaces, ainsi que les surfaces inférieures pentues 12 de l'ébauche 1 qui leur correspondent, devront être dimensionnées en conséquence, ce qui nécessitera pour l'ébauche 1 d'avoir une certaine épaisseur à ces portions des régions de bord d'attaque 3 et de bord de fuite 4. Elles sont disposées au plus près de la zone à souder pour éviter la transmission des efforts dans toute la hauteur de l'aube, qui est vrillée. Les autres éléments de l'outillage seront également définis pour bien transmettre tous les efforts.

La figure 3 montre que les efforts que les mors 18 et 19 exercent renforcent l'appui de l'ébauche 1 sur les facettes inférieures d'appui 42 et 43 puisque leurs directions de déplacement ne sont pas alignées mais dirigées vers ces facettes. Cela permet de retenir fermement l'ébauche 1 pendant le soudage par friction malgré les efforts qu'elle subit. Ici, les mors 18 et 19 coulissent sensiblement dans la direction de l'aube aux bords d'attaque et de fuite 3 et 4, ce qui est suffisant si le mouvement de friction est dirigé conformément à la flèche F dans le sens de la corde de l'aube ; si le mouvement de friction est appliqué dans l'autre direction, les mors 18 et 19 devront probablement repousser plus franchement l'ébauche 1 contre les facettes d'appui inférieures 42 et 43.

Certaines subtilités de synchronisation doivent être notées. Il est en effet utile qu'un maintien complet de l'aube précède le serrage. C'est pourquoi le mors 18 a été divisé : sa portion supérieure 26 est déplacée par la surface de came 39 avant que sa portion inférieure 27 ne soit déplacée par la surface de came 40, de sorte que la facette supérieure 22 entre dans l'encoche 8 et fournit l'appui horizontal souhaité de ce côté à un moment précoce de la commande ; de même, la facette supérieure 23 de l'autre mors 19 arrive rapidement sous la facette 10 correspondante de l'autre encoche 9.

Une autre dissymétrie existe à l'endroit des surfaces de came 32 et 33 de la came d'actionnement 30 : la surface de came 33 associée à la tige 35 et au mors 19 unitaire est disposée de façon à finir son action avant celle de l'autre surface de came 32 ; il résulte de tout cela que, quand l'appui horizontal de l'aube sur les facettes 22 et 23 a été réalisé, la portion supérieure 26 du mors 18 devient immobile alors que le mors 19 continue d'avancer, et enfin, la portion inférieure 27 du mors 18 se met à avancer et continue de le faire quand le mors 19 unitaire s'est immobilisé, la tige 35 ayant dépassé la surface de came 33, de sorte que le serrage de l'aube entre les facettes pentues 24 et 25 des mors 18 et 19 n'est complété qu'ensuite en poursuivant la rotation de l'écrou 81. Cette indépendance des opérations de positionnement et de serrage, malgré l'unicité du système de commande, est très avantageuse pour monter sans difficulté l'ébauche 1 à la position voulue dans l'outillage.

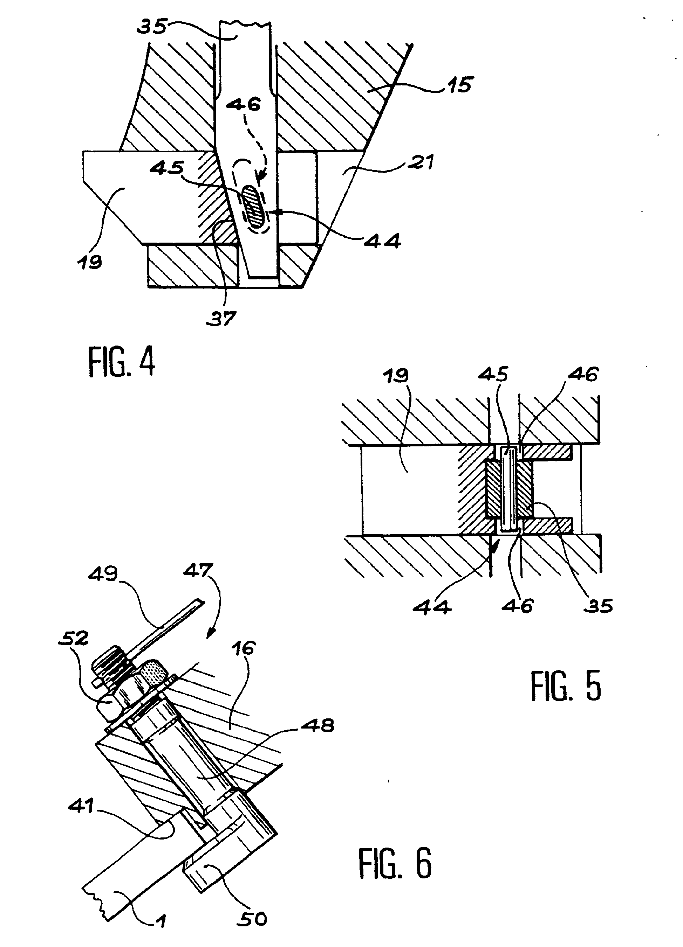

Le système de commande est également apte à faire reculer les mors 18 et 19, de même que les tiges 34 et 35 quand le soudage de l'ébauche 1 sur la manchette 6 a été fini : on se sert de systèmes tels que celui des figures 4 et 5, disposés entre la tige 35 et le mors unitaire 19, et qui portent indistinctement la référence 44 : ils comprennent au moins un pion 45, ici engagé à travers la tige 35 et dépassant latéralement d'elle, et une surface d'appui 46 opposée au pion 45 et disposée sur le mors 19. Cette surface d'appui 46 est sécante à la direction de recul du mors 19 et inclinée vers l'ébauche 1 quand on la parcourt en direction ascendante. Quand la tige 35 remonte, le pion 45 touche cette surface 46 et la repousse, ce qui fait reculer le mors 19 et libère l'ébauche 1. Ce mécanisme de recul 44 existe, sous des formes identiques ou sensiblement, entre la came d'actionnement 30 et chacune des tiges 34 et 35, entre la tige 34 et chacune des portions 26 et 27 du mors 18 et, comme on l'a vu, entre la tige 35 et le mors 19. Une commande de recul appliquée à l'écrou 81 est traduite par un mouvement de la came d'actionnement 30 vers la droite, se répercute par une élévation des tiges 34 et 35 et par un recul des mors 18 et 19.

Un dernier élément de l'invention sera décrit en liaison à la figure 6 : il s'agit d'un verrou 47 comprenant un axe 48 engagé à travers le chapiteau 16 du cadre 13 et connecté à une poignée de manoeuvre 49 d'un côté du chapiteau 16 et à un loquet 50 de l'autre côté. Une rotation de la poignée 49 fait tourner le loquet 50 et peut l'amener devant la facette d'appui supérieure 41, ce qui immobilise l'ébauche 1 à cet endroit et la garantit de tout déversement pendant le soudage par friction. Un écrou 52 engagé sur une portion filetée de l'axe 48 peut retenir le verrou 47 en serrant l'axe 48 sur le cadre 13, entre l'écrou 52 et le loquet 50. On comprend que l'appui est assuré sur la facette d'appui supérieure 41.

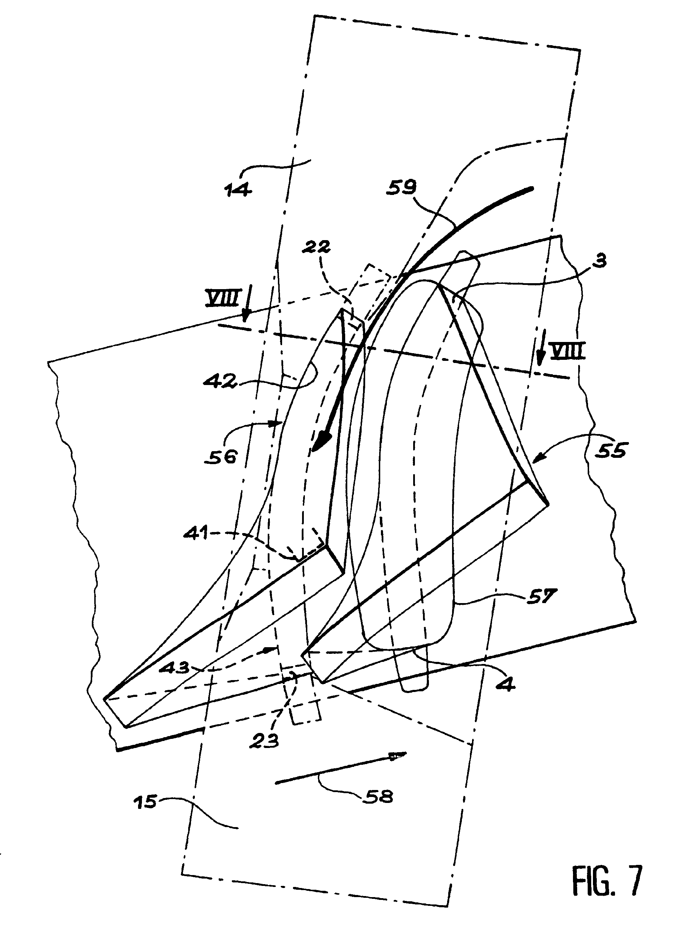

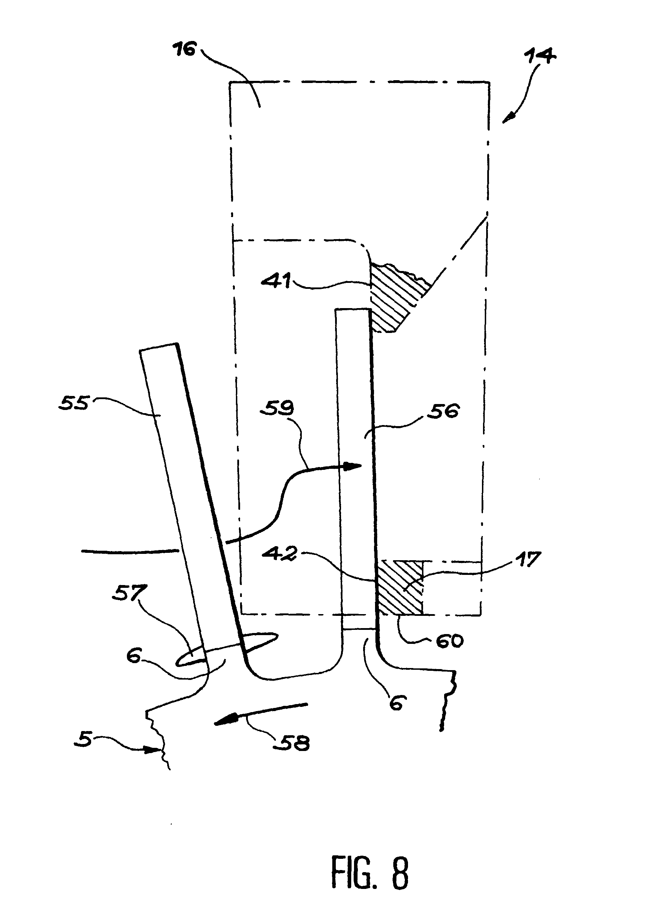

L'opération de soudage par friction est menée classiquement, le cadre 13 dans lequel l'ébauche 1 a été fixée étant solidaire d'une des parties mutuellement mobiles de la machine, dont l'autre partie maintient le disque 7. on s'intéressera cependant plus en détail à l'insertion successive des ébauches 1 d'aube dans l'outillage et sur le disque 7. Les figures 7 et 8 illustrent, respectivement en vue de dessus et en vue de côté, l'outillage, le disque 7 et deux ébauches, dont la première est une ébauche soudée 55 déjà à sa manchette 6 et pourvue d'un bourrelet 57 de soudage et la seconde est une ébauche nouvelle 56 semblable à l'ébauche 1 considérée jusqu'ici. Quand le soudage de l'ébauche 55 est fini, les mors 18 et 19 sont ouverts, l'outillage est légèrement remonté pour le séparer du bourrelet 57 et le disque 7 est tourné d'un pas d'aube dans le sens de la flèche 58. L'ébauche nouvelle 56 est alors posée sur sa manchette 6 et contre les facettes d'appui latéral 41, 42 et 43 par un mouvement transversal et sinueux selon la flèche 59, qui la fait passer entre l'outillage et l'ébauche soudée 55, et par-dessus le bourrelet 57. L'outillage est ensuite remis en place, les mors 18 et 19 serrés, et le soudage par friction recommence. On notera que la face inférieure 60 de la toile 17, qui s'étend peu au-dessus du joint de soudage, limite la remontée du bourrelet qui se forme alors et l'empêche de gêner l'insertion de l'ébauche suivante.

L'outillage n'est retiré de la machine que quand la dernière ébauche a été soudée. Après le soudage de la dernière aube, on pourra plus facilement retirer l'outillage si la toile 17 est démontable.

L'outillage est, plus généralement, dimensionné pour permettre de souder successivement toutes les aubes du disque 7 sans devoir le démonter : les colonnes 14 et 15 en particulier ne doivent pas envelopper à l'excès l'ébauche nouvelle 56 en contrariant le mouvement d'insertion ; elles doivent encore ne pas être trop épaisses à l'arrière de l'ébauche nouvelle 56 de manière à ne pas être heurtées par une aube, soudée en premier, à la fin du soudage sur le disque 7.

On remarquera enfin que l'outillage pourrait immobiliser des ébauches dépourvues du talon 5, que l'on pourrait souder autrement que par friction au disque 7, puisqu'il ne prend pas appui sur ce talon 5.

Comme l'invention ne porte ni sur les machines de soudage par friction proprement dites, ni sur les procédés de soudage, il est inutile de les décrire ici.

## Revendications

1. Outillage de maintien d'une aube, comprenant :
un cadre (13) muni de trois facettes (41, 42, 43) d'appui latéral de l'aube (1) dont une première facette supérieure d'appui est proche d'un sommet de l'aube et deux autres facettes inférieures d'appui sont proches de portions inférieures de bords de fuite et d'attaque (3, 4) de l'aube; un verrou (47) d'aube mobile sur le cadre et opposé à la facette supérieure d'appui ; deux mors (18, 19) mobiles sur le cadre et dirigés vers les portions inférieures de bords d'attaque et de fuite dans des directions sensiblement concourantes mais pas alignées, et dirigés aussi sensiblement vers les facettes inférieures d'appui ; un système de commande de mors ; et deux facettes d'appui horizontal (22, 23) de l'aube.

2. Outillage de maintien d'une aube selon la revendication 1, où les mors sont en forme de coins pénétrant dans des encoches (8, 9) de l'aube aux portions de bords d'attaque et de fuite.

3. Outillage de maintien d'une aube selon la revendication 2, où les facettes d'appui horizontal sont formées par des facettes supérieures (22, 23) des mors, horizontales alors que des facettes inférieures (24, 25) des mors sont inclinées.

4. Outillage de maintien d'une aube selon la revendication 3, où un des mors (18) est divisé en deux portions superposées (26, 27).

5. Outillage de maintien d'une aube selon l'une quelconque des revendications 1 à 4, où le système de commande comprend des cames de transmission (34, 35) poussant sur des surfaces postérieures des mors.

6. Outillage de maintien d'une aube selon l'une quelconque des revendications 1 à 5, où le système de commande comprend un organe d'actionnement unique (81) pour les deux mors (18,19).

7. Outillage de maintien d'une aube selon la revendication 6, où l'organe d'actionnement est lié à une came d'actionnement (30) à deux surfaces de came (32, 33) qu'il fait se déplacer.

8. Outillage de maintien d'une aube selon les revendications 5 et 7, où les cames de transmission (34, 35) sont des tiges poussant sur les mors (18, 19) par des extrémités inférieures et les surfaces de came (32, 33) de la came d'actionnement poussent sur des extrémités supérieures des tiges.

9. Outillage de maintien d'une aube selon la revendication 8, où les tiges sont verticales, s'étendent dans deux colonnes (14, 15) du cadre (13), et la came d'actionnement (30) est horizontale et s'étend dans un chapiteau (16) de ce cadre (13).

10. Outillage de maintien d'une aube selon l'une quelconque des revendications 5 à 9, où les cames de transmission comprennent des mécanismes de recul (44) des mors.

11. Outillage de maintien d'une aube selon l'une quelconque des revendications 8 ou 9, où la came d'actionnement comprend des mécanismes de recul (44) des tiges.

12. Outillage de maintien d'une aube selon l'une quelconque des revendications 10 ou 11, où les mécanismes de recul sont composés de pions (45) transversaux aux cames et de faces d'appui (46) sur les mors, sécantes à des directions de recul.

13. Outillage de maintien d'une aube selon les revendications 4 et 5, où une des cames de transmission (34), qui pousse sur la face postérieure du mors divisé, comprend une surface de came supérieure (39) en saillie sur une surface de came inférieure (40).

14. Outillage de maintien d'une aube selon les revendications 7 et 13, où les surfaces de came (32, 33) de la came d'actionnement sont espacées de sorte que la surface de came inférieure (40) de la came de transmission (34) du mors divisé (18) continue de pousser sur le mors après que l'autre came de transmission (35) a dépassé l'autre surface de came (33) de la came d'actionnement.

15. Outillage selon l'une quelconque des revendications 1 à 14, où le système de commande comprend une transmission à vis (29).

16. Outillage selon l'une quelconque des revendications 1 à 15, où le verrou (47) comprend un loquet (50) rotatif et un écrou de serrage engagé sur un axe traversant le cadre.

17. Outillage selon l'une quelconque des revendications 1 à 16, où le cadre comprend une toile (17) de support latéral de l'aube entre les facettes inférieures d'appui (42, 43) et de rigidification de l'outillage.

18. Outillage selon la revendication 17, où la toile (17) comprend une face inférieure (60) d'arrêt vers le haut d'un bourrelet de soudage par friction de l'aube.

19. Outillage selon l'une quelconque des revendications 1 à 18, **caractérisé en ce qu'**il est conçu pour permettre de souder successivement toutes les aubes d'un disque, sans devoir démonter l'outillage de la machine.

20. Outillage selon la revendication 18, où la toile (17) sera démontable pour pouvoir retirer l'outillage après le soudage de la dernière aube.

21. Application de l'outillage selon l'une quelconque des revendications précédentes à un procédé de soudage de l'aube maintenue sur l'outillage.

22. Application selon la revendication 18, où l'aube a été entaillée d'encoches (8, 9) de réception des mors (18, 19) aux portions de bord d'attaque et de fuite (3, 4).

23. Application selon l'une quelconque des revendications 21 et 22 à un soudage par friction.

## Claims

1. Tooling for holding a blade, comprising: a surround (13) equipped with three facets (41, 42, 43) to press laterally on the blade (1), of which a first, upper, bearing facet is close to a tip of the blade and two other, lower, bearing facets are close to lower portions of trailing and leading edges (3, 4) of the blade; a blade lock (47) able to move on the surround and opposite the upper bearing facet; two jaws (18, 19) able to move on the surround and directed towards the lower portions of the leading and trailing edges in directions which are substantially concurrent but not aligned, and also directed substantially towards the lower bearing facets; a jaw control system; and two horizontal facets (22, 23) for bearing on the blade.

2. Tooling for holding a blade according to Claim 1, in which the jaws are in the form of wedges entering cutouts (8, 9) in the blade at the leading and trailing edge portions.

3. Tooling for holding a blade according to Claim 2, in which the horizontal bearing facets are formed by upper facets (22, 23) of the jaws which are horizontal, whereas lower facets (24, 25) of the jaws are inclined.

4. Tooling for holding a blade according to Claim 3, in which one of the jaws (18) is split into two superposed portions (26, 27).

5. Tooling for holding a blade according to any one of Claims 1 to 4, in which the control system comprises transmission cams (34, 35) pressing against posterior surfaces of the jaws.

6. Tooling for holding a blade according to any one of Claims 1 to 5, in which the control system comprises a single actuating member (81) for the two jaws (18, 19).

7. Tooling for holding a blade according to Claim 6, in which the actuating member is connected to an actuating cam (30) having two cam surfaces (32, 33) that it causes to move.

8. Tooling for holding a blade according to Claims 5 and 7, in which the transmission cams (34, 35) are rods pressing against the jaws (18, 19) via lower ends and the cam surfaces (32, 33) of the actuating cam press against upper ends of the rods.

9. Tooling for holding a blade according to Claim 8, in which the rods are vertical, running through two columns (14, 15) of the surround (13) and the actuating cam (30) is horizontal and runs through a capital (16) of this surround (13).

10. Tooling for holding a blade according to any one of Claims 5 to 9, in which the transmission cams comprise retraction mechanisms (44) for retracting the jaws.

11. Tooling for holding a blade according to either one of Claims 8 and 9, in which the actuating cam comprises retracting mechanisms (44) for retracting the rods.

12. Tooling for holding a blade according to either one of Claims 10 and 11, in which the retracting mechanisms are made up of pins (45) transverse to the cams and bearing faces (46) on the jaws running secant to directions of retraction.

13. Tooling for holding a blade according to Claims 4 and 5, in which one of the transmission cams (34) which presses against the posterior face of the split jaw, comprises an upper cam surface (39) projecting onto a lower cam surface (40).

14. Tooling for holding a blade according to Claims 7 and 13, in which the cam surfaces (32, 33) of the actuating cam are spaced apart in such a way that the lower cam surface (40) of the transmission cam (34) of the split jaw (18) continues to press against the jaw after the other transmission cam (35) has gone beyond the other cam surface (33) of the actuating cam.

15. Tooling according to any one of Claims 1 to 14, in which the control system comprises a screw (29) transmission.

16. Tooling according to any one of Claims 1 to 15, in which the lock (47) comprises a rotary latch (50) and a lock nut engaged on a spindle passing through the surround.

17. Tooling according to any one of Claims 1 to 16, in which the surround comprises a screen (17) for laterally supporting the blade between the lower bearing facets (42, 43) and for stiffening the tooling.

18. Tooling according to Claim 17, in which the screen (17) comprises an underside (60) that prevents a bead of weld material originating from the friction-welding of the blade from travelling upwards.

19. Tooling according to any one of Claims 1 to 18, **characterized in that** it is designed to allow all the blades of a disk to be welded in succession without the need to remove the tooling from the machine.

20. Tooling according to Claim 18, in which the screen (17) will be removable so that the tooling can be taken away once the last blade has been welded.

21. Application of the tooling according to any one of the preceding claims to a method of welding the blade held on the tooling.

22. Application according to Claim 18, in which the blade has been given cutouts (8, 9) to accept the jaws (18, 19) in the leading and trailing edge portions (3, 4).

23. Application according to either one of Claims 21 and 22 to friction welding.

## Patentansprüche

1. Werkzeugvorrichtung zum Halten einer Schaufel, bestehend aus; einem Rahmen (13) mit drei Flächen (41,42,43) zur seitlichen Anlage der Schaufel (1), von denen sich eine erste, obere Anlagefläche im Bereich einer Spitze der Schaufel befindet und zwei weitere, untere Anlageflächen sich im Bereich von unteren Abschnitten der Hinterkante bzw. Vorderkante (3,4) der Schaufel befinden; einem an dem Rahmen bewegbaren Riegel (47) für eine Schaufel, der sich gegenüber der oberen Anlagefläche befindet; zwei an dem Rahmen bewegbaren Spannbacken (18, 19), die im Wesentlichen aufeinander zulaufend, aber nicht aufeinander ausgerichtet, den unteren Abschnitten der Hinter- und Vorderkante zugewandt sind und auch im Wesentlichen auf die unteren Anlageflächen gerichtet sind; einem Spannbacken-Steuersystem; und zwei horizontalen Anlageflächen (22, 23) der Schaufel.

2. Werkzeugvorrichtung zum Halten einer Schaufel nach Anspruch 1, wobei die Spannbacken keilförmig ausgeführt sind und in Einkerbungen (8, 9) der Schaufel an den Vorderkanten- und Hinterkantenabschnitten eindringen.

3. Werkzeugvorrichtung zum Halten einer Schaufel nach Anspruch 2, wobei die horizontalen Anlageflächen von oberen Flächen (22, 23) der Spannbacken gebildet sind, die horizontal sind, während untere Flächen (24, 25) der Spannbacken geneigt sind.

4. Werkzeugvorrichtung zum Halten einer Schaufel nach Anspruch 3, wobei eine der Spannbacken (18) in zwei übereinanderliegende Abschnitte (26, 27) unterteilt ist.

5. Werkzeugvorrichtung zum Halten einer Schaufel nach einem der Anspruche 1 bis 4, wobei das Steuersystem Übertragungsnocken (34, 35) umfasst, die auf Hinterseiten der Spannbacken Schub ausüben.

6. Werkzeugvorrichtung zum Halten einer Schaufel nach einem der Ansprüche 1 bis 5, wobei das Steuersystem ein einziges Betätigungsorgan (81) für die beiden Spannbacken (18, 19) beinhaltet.

7. Werkzeugvorrichtung zum Halten einer Schaufel nach Anspruch 6, wobei das Betätigungsorgan mit einem Betätigungsnocken (30) mit zwei Nockenflächen (32, 33) verbunden ist, die es verschiebt,

8. Werkzeugvorrichtung zum Halten einer Schaufel nach den Ansprüchen 5 und 7, wobei die Übertragungsnocken (34, 35) Stangen sind, die mit unteren Enden Schub auf die Spannbacken (18, 19) ausüben, und die Nockenflächen (32, 33) des Betätigungsnockens Schub auf obere Enden der Stangen ausüben.

9. Werkzeugvorrichtung zum Halten einer Schaufel nach Anspruch 8, wobei sich die Stangen vertikal in zwei Säulen (14,15) des Rahmens (13) erstrecken und der Betätigungsnocken (30) horizontal ist und sich in einem Aufsatz (16) dieses Rahmens (13) erstreckt.

10. Werkzeugvorrichtung zum Halten einer Schaufel nach einem der Ansprüche 5 bis 9, wobei die Übertragungsnocken Rückzugsmechanismen (44) für die Spannbacken umfassen.

11. Werkzeugvorrichtung zum Halten einer Schaufel nach einem der Ansprüche 8 oder 9, wobei der Betätigungsnocken Rückzugsmechanismen (44) der Stangen umfasst.

12. Werkzeugvorrichtung zum Halten einer Schaufel nach einem der Ansprüche 10 oder 11, wobei die Rückzugsmechanismen von quer zu den Nocken verlaufenden Stiften (45) und von Anlageflächen (46) an den Spannbacken gebildet werden, die Sekanten zu Rückzugsrichtungen bilden.

13. Werkzeugvorrichtung zum Halten einer Schaufel nach den Ansprüchen 4 und 5, wobei einer der Übertragungsnocken (34), der Schub auf die Hinterseite der unterteilten Spannbacke ausübt, eine obere Nockenfläche (39) aufweist, die über eine untere Nockenfläche (40) hinausragt.

14. Werkzeugvorrichtung zum Halten einer Schaufel nach den Ansprüchen 7 und 13, wobei die Nockenflächen (32,33) des Betätigungsnockens dergestalt beabstandet sind, dass die untere Nockenfläche (40) des Übertragungsnockens (34) der unterteilten Spannbacke (18) weiter Schub auf die Spannbacke ausübt, nachdem der andere Übertragungsnocken (35) sich über die andere Nockenfläche (33) des Betätigungsnockens hinaus bewegt hat.

15. Werkzeugvorrichtung nach einem der Ansprüche 1 bis 14, wobei das Steuersystem eine Kraftübertragung per Spindel (29) umfasst.

16. Werkzeugvorrichtung nach einem der Ansprüche 1 bis 15, wobei der Riegel (47) einen Drehriegel (50) und eine Feststellmutter aufweist, welche sich an einer durch den Rahmen verlaufenden Achse in Eingriff befindet.

17. Werkzeugvorrichtung nach einem der Ansprüche 1 bis 16, wobei der Rahmen eine Rippe (17) als seitliche Stütze der Schaufel zwischen den untere Anlageflächen (42, 43) und zur Versteifung der Werkzeugvorrichtung aufweist.

18. Werkzeugvorrichtung nach Anspruch 17, wobei die Rippe (17) eine Unterseite (60) als Anschlag nach oben für eine Schweißraupe vom Reibschweißen der Schaufel aufweist.

19. Werkzeugvorrichtung nach einem der Ansprüche 1 bis 18,
**dadurch gekennzeichnet,**
**dass** sie dergestalt ausgeführt ist, dass sie es ermöglicht, alle Schaufeln eines Schaufelrads nacheinander zu schweißen, ohne die Werkzeugvorrichtung von der Maschine abbauen zu müssen.

20. Werkzeugvorrichtung nach Anspruch 18, wobei die Rippe (17) ausbaubar ist, um die Werkzeugvorrichtung nach dem Schweißen der letzten Schaufel abnehmen zu können.

21. Anwendung der Werkzeugvorrichtung nach einem der vorherigen Ansprüche bei einem Schweißvorgang an der an der Werkzeugvorrichtung festgehaltenen Schaufel.

22. Anwendung nach Anspruch 21, wobei die Schaufel an den Vorderkanten- und Hinterkantenabschnitten (3, 4) mit Einkerbungen (8, 9) zur Aufnahme der Spannbacken (18, 19) versehen sind.

23. Anwendung nach einem der Ansprüche 21 und 22 beim Reibschweißen.
